# FASCICULE DE BREVET EUROPEEN

(11) **EP 2 328 948 B1**
(45) Date de publication et mention de la délivrance du brevet: **11.06.2014**
(21) Numéro de dépôt: 09740433.9
(22) Date de dépôt: 04.08.2009
(51) Int. Cl.: C08F 265/06, C08F 220/18, C08F 2/22, C08F 2/38, C08L 63/00, C08L 67/00, C08L 69/00, C08L 51/04

(54) **PROCÉDÉ DE PRÉPARATION DES NOUVEAUX MODIFIANTS CHOCS DU TYPE COEUR ECORCE POUR MATRICES POLYMERES TRANSPARENTES**
VERFAHREN ZUR HERSTELLUNG VON NEUEN KERN-SCHALE-SCHLAGZÄHIGKEITSMODIFIKATOREN FÜR TRANSPARENTE POLYMERMATRICES
PROCESS FOR THE PREPARATION OF NOVEL CORE-SHELL IMPACT MODIFIERS FOR TRANSPARENT POLYMER MATRICES

(30) Priorité: 05.08.2008 FR 0855423
(43) Date de publication de la demande: 08.06.2011
(73) Titulaire: Arkema France, 92700 Colombes (FR)
(72) Inventeur: PIRRI, Rosangela, F-64121 Montardon (FR); HAJJI, Philippe, F-69380 Chatillon d'Azergues (FR)
(86) Numéro de dépôt international: PCT/FR2009/051554
(87) Numéro de publication internationale: WO 2010/015779

(56) Documents cités:
- EP-A- 1 801 100
- WO-A-01/60792
- WO-A-2004/058839
- US-B1- 6 369 158

## Description

### DOMAINE TECHNIQUE

La présente invention a trait à un procédé de préparation d'un copolymère coeur-écorce par polymérisation radicalaire en émulsion et à un procédé de préparation d'un copolymère coeur-écorce mettant en oeuvre un additif soufré particulier.

Les copolymères coeur-écorce ainsi obtenus trouvent, en particulier, leur application comme modifiant choc de matrices polymères, notamment de matrices polymères, dont il importe de préserver la transparence optique initiale.

Le domaine général de l'invention est donc celui des modifiants chocs susceptibles de renforcer la résistance au choc de matrices polymères, dans lesquelles ils sont introduits, en particulier pour les matrices polymères transparentes, telles que les matrices en polycarbonate.

### ÉTAT DE LA TECHNIQUE ANTÉRIEURE

Dans le domaine des matériaux polymères, notamment lorsque les matériaux polymères sont fragiles, il est communément pratiqué l'adjonction d'additifs pour conférer une résistance au choc à ces matériaux (ces additifs étant communément désignés sous la terminologie de « modifiant choc »).

Ainsi, ces additifs peuvent se présenter sous la forme de particules élastomères introduites dans la matrice polymère. Par exemple, des additifs MBS, MBS désignant un copolymère particulaire comprenant un coeur réticulé essentiellement à base de butadiène et de styrène et une écorce en polyméthacrylate de méthyle, peuvent être utilisés pour renforcer les résistances à l'impact de matrices polymères diverses, telles que les matrices en PVC rigide, les matrices en polycarbonate, les matrices en polyesters, les applications visées pouvant être des matériaux de construction tels que des profilés de fenêtres, des matériaux de packaging de produits d'utilisation courante (tels que les coques d'ordinateur, de téléphone).

Il peut exister un certain nombre d'applications où la transparence optique initiale du matériau polymère doit être maintenue après adjonction desdits additifs.

Une solution envisageable pour maintenir la transparence optique du matériau polymère est de jouer sur la composition chimique de l'additif en ajustant celle-ci de sorte que l'indice de réfraction de l'additif soit proche de celui de la matrice polymère, dans laquelle l'additif est destiné à être incorporé. Ainsi, avant l'incorporation de l'additif dans la matrice, il est nécessaire de procéder à des mesures d'indice de réfraction dudit additif synthétisé afin de pouvoir déterminer s'il convient à la matrice à laquelle il est destiné. Le but est d'éviter ou limiter fortement le phénomène de diffusion de la lumière qui conduirait à l'opacité de la matrice initialement transparente. A titre d'exemple d'additif susceptible d'être incorporé dans une matrice transparente, telle qu'une matrice en polychlorure de vinyle, sans nuire à la transparence initiale de celle-ci, on peut citer un additif coeur-écorce du type MBS, dont l'écorce est constituée d'unités issues de la polymérisation du méthacrylate de méthyle et le coeur est constitué d'unités issues de la polymérisation du butadiène-1,4 et du styrène.

Cependant, le fait de devoir jouer sur la composition des additifs pour maintenir les propriétés de transparence de la matrice polymère d'accueil contribue parfois à amoindrir l'efficacité de l'additif en ce qui concerne sa capacité à renforcer la résistance au choc des matrices auxquelles il est destiné. Ainsi, dans le cas des additifs coeur-écorce MBS pour des matrices en polychlorure de vinyle, la présence d'unités styréniques en teneur augmentant dans le coeur diminue le caractère élastomère de l'additif (notamment, par augmentation de la température de transition vitreuse et du module élastique) et par là même son efficacité.

Pour des matrices polymères particulières, telles que les matrices en polycarbonate, il n'est pas encore possible d'ajuster l'indice de réfraction d'un additif, de sorte que celui-ci préserve les propriétés de transparence optique de la matrice hôte. Certains auteurs proposent toutefois des copolymères à blocs (tels que décrit dans WO 2003/062293). Dans ce cas, la transparence de la matrice polymère hôte dépend complètement de la nanostructuration survenant lors de la mise en oeuvre du mélange constitué du polymère constitutif de la matrice et du copolymère à blocs. Cette nanostructuration ne peut intervenir que sous certaines conditions telles que :
- la compatibilité entre la matrice et l'un des blocs de l'additif utilisé ;
- les conditions de mélange, telles que le taux de cisaillement ;
- la cinétique de refroidissement après le mélange.

En d'autres termes, la transparence optique finale de la matrice renforcée par l'additif ne sera jamais sûre d'être maintenue, car elle dépend de mécanismes complexes de séparation de phases. Il existe donc un véritable besoin pour un procédé de préparation d'additifs polymères, qui puissent être utilisés dans des matrices polymères sans nuire à leurs propriétés de transparence, et qui soit de mise en oeuvre simple notamment de sorte à pouvoir être réalisé en milieu industriel.

### EXPOSÉ DE L'INVENTION

L'invention a trait à un procédé de preparation d'un copolymère coeur-écorce tel que défini dans la revendication 1.

Les Inventeurs ont découvert de manière surprenante, qu'en réalisant la partie coeur d'un copolymère coeur-écorce par polymérisation radicalaire en émulsion en présence d'un additif soufré particulier, en plus de l'initiateur de polymérisation, il était possible de diminuer de façon substantielle la taille du coeur par rapport à un milieu de polymérisation ne comprenant pas un tel additif.

Ainsi, l'invention a trait à une étape de mise en oeuvre du procédé de fabrication du coeur d'un copolymère de type coeur-écorce formant une suspension de particules, ledit coeur étant un coeur élastomère réticulé comprenant une étape de polymérisation radicalaire en émulsion d'au moins un monomère élastomère éthylénique et d'un agent de réticulation en présence d'un initiateur de polymérisation radicalaire et d'un additif soufré répondant à la formule (I) suivante : 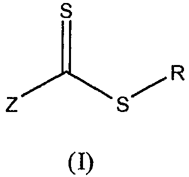 dans laquelle :
- R est choisi parmi -CH₂R¹, -CHR¹R'¹ et -CR¹R'¹R"¹ avec R¹, R'¹ et R"¹, identiques ou différents, représentant chacun indépendamment l'un de l'autre un groupe choisi parmi les groupes alkyles éventuellement substitués, les groupes carbocycliques ou hétérocycliques, saturés ou non saturés, éventuellement aromatiques, lesdits groupes étant éventuellement substitués, les groupes alkylthio éventuellement substitués, les groupes alcoxy éventuellement substitués, les groupes dialkylamino éventuellement substitués, les groupes organométalliques, les groupes acyles, les groupes acyloxy, les groupes carboxy et leurs sels, les groupes esters d'acide carboxylique, les groupes acide sulfonique et leurs sels, les groupes esters d'acide sulfonique, les groupes alcoxy- ou aryloxycarbonyles et les groupes polymères ; et
- Z est choisi parmi H, les atomes d'halogène, les groupes alkyles éventuellement substitués, les groupes aryles éventuellement substitués, les groupes hétérocycliques éventuellement substitués, les groupes -SR² éventuellement substitués, les groupes alcoxycarbonyles éventuellement substitués, les groupes aryloxycarbonyles éventuellement substitués, les groupes carboxy -COOH, les groupes acyloxy -OCOR², les groupes carbamoyles de formules -CONHR² ou -CONR²R³ éventuellement substitués, les groupes cyano -CN, les groupes -P(=O)OR²₂, les groupes -P(=O)R²₂, les groupes polymères, les groupes -OR² et les groupes -NR²R³ ; et
   - R² et R³, identiques ou différents, sont choisis dans le groupe constitué par les groupes alkyles en C₁ à C₁₈, les groupes alcényles en C₂ à C₁₈, les groupes aryles en C₆ à C₁₈, les groupes hétérocycliques, les groupes aralkyles, les groupes alkaryles, chacun de ces groupes étant éventuellement substitué par au moins un substituant choisi parmi les groupes époxy, hydroxy, alcoxy, acyles, acyloxy, carboxy et leurs sels, esters d'acide carboxylique, acide sulfonique et leurs sels, esters d'acide sulfonique, alcoxy- ou aryloxycarbonyles, isocyanato, cyano, silyles, halogènes ou dialkylamino.

Le groupe R tel que défini ci-dessus peut être libéré sous la forme d'un radical R, qui amorce la polymérisation par radicaux libres.

Parmi les additifs soufrés, on peut citer notamment les dithioesters (composés comportant au moins un groupe -C(=S)S-), les dithiocarbonates ou xanthates (composés comportant au moins un groupe -O-C(=S)S-), les dithiocarbamates (composés comportant au moins un groupe -N-C(=S)S-) et les trithiocarbonates (composés comportant au moins un groupe -S-C(=S)S-).

Ainsi, les inventeurs ont pu constater, qu'en prévoyant dans le milieu de polymérisation, un additif soufré tel que défini ci-dessus, il était possible d'obtenir une suspension de particules (lesdites particules étant destinées à constituer le coeur du copolymère coeur-écorce) de diamètre moyen inférieur à celui qui serait obtenu dans un milieu de polymérisation ne comportant pas un tel additif. Il est notamment possible d'obtenir une suspension de particules présentant un diamètre moyen de particules inférieur à 50 nm.

Sans être lié nullement par la théorie, les auteurs considèrent que la diminution de taille des particules est due au fait que les additifs soufrés tels que définis ci-dessus se greffent sur la particule en croissance, permettant d'améliorer la stabilité colloïdale et de réduire la taille des particules.

Grâce à une taille de particules très faible, on évite tout phénomène de diffusion de la lumière. On peut ainsi utiliser pour la constitution du coeur un large panel de monomères élastomères, sans se soucier de l'indice de réfraction résultant des particules obtenues par polymérisation desdits monomères.

Le procédé de l'invention est un procédé simple de mise en oeuvre, car il repose sur les principes bien connus de la polymérisation radicalaire en émulsion. Ce procédé est susceptible d'être mis facilement en oeuvre en milieu industriel, avec des bons rendements.

Avant d'entrer plus en détail dans la description des additifs soufrés de formule (I), il convient de fournir les définitions suivantes.

Par groupe alkyle, on entend classiquement un groupe alkyle, linéaire ou ramifié pouvant comprendre de 1 à 18 atomes de carbone.

Par groupe alkylthio, on entend classiquement un groupe -S-alkyle, alkyle pouvant répondre à la même définition que celle donnée ci-dessus, la liaison au reste de la molécule se faisant par le biais de l'atome de soufre.

Par groupe alcoxy, on entend classiquement un groupe -O-alkyle, alkyle pouvant répondre à la même définition que celle donnée ci-dessus, la liaison au reste de la molécule se faisant par le biais de l'atome d'oxygène.

Par groupe ester d'acide carboxylique, on entend classiquement un groupe issu d'un groupe carboxylique -COOH, dans lequel le groupe -OH a été remplacé par un radical hydrocarboné.

Par groupe ester d'acide sulfonique, on entend classiquement un groupe issu d'un groupe acide sulfonique -SO₃H, dans lequel un groupe -OH a été remplacé par un radical hydrocarboné.

Par groupe polymère, on entend classiquement un groupe comprenant un enchaînement d'unités répétitives issues de la polymérisation d'un ou plusieurs monomères, le mécanisme de polymérisation pouvant être quelconque.

Par groupe aralkyle, on entend classiquement un groupe aryle substitué par au moins un groupe alkylène, lequel groupe alkylène forme pont entre le groupe aryle et le reste de la molécule. Un exemple de groupe aralkyle est le groupe benzyle.

Par groupe alkaryle, on entend classiquement un groupe aryle substitué par au moins un groupe alkyle, la liaison au reste de la molécule se faisant par le biais du groupe aryle. Un exemple de groupe alkaryle est le groupe tolyle.

Il est évoqué la possibilité que certains groupes définis dans la formule (I) puissent être substitués. Les substituants peuvent être classiquement choisis parmi les groupes époxy, hydroxy, alcoxy, acyles, acyloxy, carboxy (et ses sels), esters d'acide carboxylique, -SO₃H (et ses sels), esters d'acide sulfonique, alcoxy- et aryloxycarbonyles, isocyanato, cyano, silyles, halogènes et dialkylamino.

Des additifs soufrés susceptibles d'être avantageusement utilisés dans le cadre de l'invention sont des additifs répondant à la formule (II) suivante : 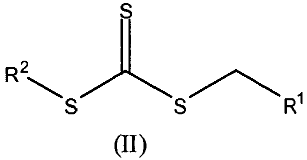 dans laquelle R¹ et R² répondent à la même définition que celle donnée ci-dessus.

En particulier, R¹ peut correspondre à un groupe aryle, tel qu'un groupe phényle, tandis que R² peut correspondre à un groupe aralkyle, tel qu'un groupe benzyle.

Un additif soufré particulièrement avantageux est le trithiocarbonate de dibenzyle (DBTTC) répondant à la formule (III) suivante :

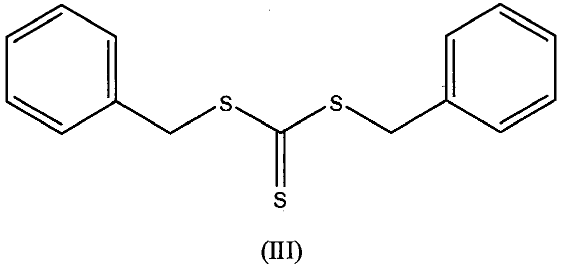

Ainsi, l'additif soufré utilisé est, de préférence, le DBTTC (CAS N° 26505-29-0.)

Des additifs soufrés susceptibles d'être utilisés dans le cadre de l'invention peuvent être des additifs de formule (I), pour lesquels R est un groupe - CHR¹R'¹ avec R¹ représentant un groupe alkyle, tel qu'un groupe méthyle et R'¹ représentant un groupe carboxy et Z représente un groupe -SR² avec R² représentant un groupe alkyle substitué par un groupe carboxy, tel qu'un groupe carboxyprop-2-yle.

Un additif soufré répondant à la définition ci-dessus est le trithiocarbonate de dipropyle (DPTTC) (CAS N° 6332-91-8) répondant à la formule (IV) suivante : 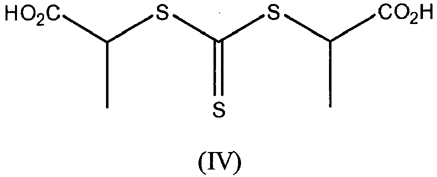 ou ses sels, notamment le sel de sodium (CAS N° 864970-33-2).

L'additif soufré est introduit, avantageusement, dans l'étape de polymérisation, à une teneur pouvant aller de 0,005 partie en poids à 5 parties en poids pour 100 parties de monomères, et de préférence, de 0,01 à 2 parties en poids pour 100 parties de monomères.

Les monomères éthyléniques élastomères susceptibles d'être polymérisés dans le cadre du procédé de l'invention peuvent être de tous types connus de l'homme du métier, étant entendu que le polymère résultant de la polymérisation desdits monomères aura, classiquement, une température de transition vitreuse (Tg) inférieure à la température ambiante, de préférence inférieure à 10°C, de préférence encore inférieure à 0°C. Selon un mode particulier et avantageux de réalisation de l'invention, lesdits monomères peuvent être choisis parmi un isoprène, un butadiène (tel que le butadiène-1,4), le styrène, l'acrylonitrile, un (méth)acrylate d'alkyle et les mélanges de ceux-ci. A titre d'exemples de mélanges de monomères, on peut utiliser les mélanges styrène-acrylate d'alkyle, styrène-méthacrylate d'alkyle, styrène-butadiène.

En particulier, le monomère élastomère peut être un acrylate d'alkyle, tel que l'acrylate de n-butyle.

L'agent de réticulation est classiquement un monomère comprenant au moins deux fonctions éthyléniques. De préférence l'agent de réticulation comprend des fonctions éthyléniques choisies parmi la fonction vinylique, allylique, acrylique ou méthacrylique et leur mélanges. En particulier, l'agent de réticulation peut être le divinylbenzène, le trivinylbenzène, l'acrylate de vinyle, le méthacrylate d'allyle CH₂=C (CH₃) COOCH₂CH=CH₂, le méthacrylate de vinyle CH₂=C(CH₃)COOCH=CH₂, les esters poly(méth) acryliques de polyols tels que le butadiènedioldiacrylate, l'hexanedioldiacrylate, le PEG-diacrylate (PEG signifiant polyéthylèneglycol), le triméthacrylate de triméthylol propane et les mélanges de ceux-ci.

Avantageusement, lorsque le monomère élastomère est un (méth)acrylate d'alkyle, l'agent de réticulation peut correspondre au méthacrylate d'allyle.

L'agent de réticulation est compris, avantageusement, dans le milieu de polymérisation, à raison d'une teneur allant de 0,01 partie en poids à 10 parties en poids pour 100 parties en poids de monomère(s), de préférence de 0,1 partie en poids à 2 parties en poids pour 100 parties en poids de monomère(s).

L'initiateur de polymérisation de l'invention est un initiateur de polymérisation radicalaire apte à engendre par réaction avec des monomères des radicaux libres, à partir desquels la réaction de polymérisation va se propager.

Cet initiateur de polymérisation radicalaire peut être de tous types, et par exemple des types suivants :
- des composés azoïques tels l'azoisobutyronitrile (AiBN) ;
- des peroxydes organiques, tels que l'hydroperoxyde de t-butyle, l'hydroperoxyde de cumène, le peroxyde de benzoyle, le peroxyde de lauroyle ;
- des sels persulfates, tels que le persulfate de sodium, le persulfate de potassium, le persulfate d'ammonium.

En particulier, l'initiateur de polymérisation peut être un sel persulfate, tel que le persulfate de potassium, notamment lorsque le monomère est l'acrylate n-butyle.

L'étape de polymérisation radicalaire en émulsion peut avantageusement être réalisée en présence d'au moins un tensioactif et éventuellement d'au moins un agent de transfert de chaîne, permettant de réguler la masse moléculaire des chaînes produites lors de l'étape de polymérisation.

Comme tensioactifs susceptibles d'être utilisés, on peut citer les tensioactifs anioniques, tels qu'un sel d'acide gras, un sel alkylsulfate (comme le laurylsulfate de sodium), un sel alkylbenzènesulfate (comme le dodécylbenzènesulfonate de sodium), un sel alkylphosphate ou un sel sulfosuccinate diester ou des tensioactifs non ioniques, tel qu'un polyoxyéthylène alkyléther ou un ester d'acide gras polyoxyéthylène, les tensioactifs cationiques, tels que les halogénures d'alkyl- et/ou aryl-ammoniums quaternaires, les tensioactifs zwitterioniques ou amphotères, tels que les tensioactifs comprenant un groupe bétaïne.

Comme agents de transfert de chaîne, on peut citer, avantageusement, les composés mercaptans comprenant au moins 4 atomes de carbone, tels que le butylmercaptan, le n-octylmercaptan, le n-dodécylmercaptan, le tert-dodécylmercaptan.

Selon l'invention, l'étape de polymérisation en émulsion est réalisée, classiquement, dans un milieu de dispersion aqueux.

L'avantage de travailler avec un tel milieu de dispersion est que le procédé est un procédé propre, ce qui est particulièrement intéressant en milieu industriel.

D'un point de vue pratique, l'étape de polymérisation radicalaire en émulsion peut être réalisée de la façon suivante :
- la préparation d'un premier mélange par mise en contact d'un agent tensioactif et d'un milieu de dispersion, ledit milieu de dispersion étant, de préférence, de l'eau ;
- la préparation d'un second mélange par mise en contact dudit monomère élastomère éthylénique et dudit agent de réticulation, en présence dudit agent soufré et en présence, éventuellement, d'un agent de transfert de chaîne ;
- une mise en contact dudit premier mélange et dudit second mélange, le second mélange pouvant être introduit dans ledit premier mélange en mode discontinu (ou mode batch, c'est-à-dire en une seule étape sans délai) ou en mode semi-continu ou continu (l'introduction étant réalisée par étapes sur une durée pouvant aller de plusieurs minutes à plusieurs heures pour le mode semi-continu ou en une seule étape sur une durée pouvant aller de plusieurs minutes à plusieurs heures) ;
- une étape d'ajout au mélange résultant de l'initiateur de polymérisation, l'étape d'ajout pouvant être réalisée en mode discontinu (ou mode batch, c'est-à-dire en une seule étape sans délai) ou en mode semi-continu ou continu (l'introduction étant réalisée par étapes sur une durée pouvant aller de plusieurs minutes à plusieurs heures pour le mode semi-continu ou en une seule étape sur une durée pouvant aller de plusieurs minutes à plusieurs heures).

Un mode de réalisation particulier de l'invention est celui pour lequel :
- le monomère élastomère éthylénique est l'acrylate de n-butyle ;
- l'agent de réticulation est le méthacrylate d'allyle ;
- l'additif soufré est le trithiocarbonate de dibenzyle ;
- l'initiateur de polymérisation est un sel de persulfate de potassium.

Le but du procédé mentionné ci-dessus est de fabriquer le coeur d'un copolymère de type coeur-écorce (correspondant à la terminologie anglaise « core-shell »). Ainsi, l'invention a trait à un copolymère coeur-écorce susceptible d'être obtenu par un procédé tel que défini ci-dessus présentant une taille moyenne de particules coeur inférieure à 50 nm, de préférence inférieure à 40 nm, de préférence encore inférieure à 30 nm.

Le procédé de fabrication d'un coeur peut constituer une étape s'inscrivant dans le cadre de la réalisation d'un copolymère coeur-écorce.

L'invention a ainsi trait à un procédé de préparation d'un copolymère coeur-écorce (dit copolymère « core-shell ») comprenant les étapes suivantes :
- une étape de mise en oeuvre du procédé de fabrication du coeur d'un copolymère coeur-écorce tel que défini ci-dessus ;
- une étape de réalisation de l'écorce par mise en contact du coeur obtenu à l'étape précédente avec au moins un monomère destiné à entrer dans la constitution de l'écorce.

Les monomères susceptibles d'entrer dans la constitution de l'écorce peuvent être de tous types mais, en particulier, sont choisis de sorte à ce que le polymère résultant de la polymérisation de ceux-ci présente une température de transition vitreuse (Tg) supérieure à la température ambiante et que le polymère résultant soit compatible avec la matrice dans laquelle les copolymères coeur-écorce sont destinés à être incorporés. Par Tg supérieure à la température ambiante on entend un polymère ou un copolymère ayant une Tg supérieure à 25°C, de préférence, comprise entre 40 et 150°C, et plus préférentiellement comprise entre 60°C et 140°C. De façon non exhaustive, on peut citer les (méth)acrylates d'alkyle, les monomères styréniques, l'acrylonitrile et les mélanges de ceux-ci. En particulier, l'écorce peut être en polyméthacrylate de méthyle, en polystyrène, en copolymère méthacrylate de méthyle/styrène. En particulier, le monomère destiné à entrer dans la constitution de l'écorce peut être le méthacrylate de méthyle.

D'un point de vue pratique, l'étape de réalisation de l'écorce peut se dérouler de la façon suivante :
- une étape d'ajout d'un monomère ou d'un mélange de monomères préalablement préparé destiné à entrer dans la constitution de l'écorce au coeur déjà formé, cet ajout pouvant se faire selon un mode discontinu (ou mode batch, c'est-à-dire en une seule étape sans délai) ou en mode semi-continu ou continu (l'introduction étant réalisée par étapes sur une durée pouvant aller de plusieurs minutes à plusieurs heures pour le mode semi-continu ou en une seule étape sur une durée pouvant aller de plusieurs minutes à plusieurs heures) ;
- simultanément ou postérieurement à cette étape d'ajout, une étape d'introduction d'un initiateur de polymérisation selon un mode discontinu ou un mode semi-continu ou continu tel que mentionné ci-dessus.

Le procédé susmentionné peut comprendre, à l'issue de l'étape de réalisation de l'écorce, une étape de récupération desdites particules de copolymère coeur-écorce obtenues, par des techniques classiques de récupération de latex (telles que l'atomisation, la coagulation), afin de récupérer une poudre. Lesdits copolymères coeur-écorce forment une suspension de particules coeur-écorce, de diamètre moyen de particules inférieur à 60 nm , de préférence inférieure à 50 nm, de préférence encore inférieure à 40 nm.

Comme mentionné précédemment, l'utilisation d'un additif soufré tel que mentionné ci-dessus permet d'obtenir un coeur polymère en suspension destiné à entrer dans la constitution d'un copolymère coeur-écorce présentant une taille moyenne de particules coeur inférieure à 50 nm et diamètre moyen de particules coeur-écorce inférieur à 60 nm.

Ainsi, l'invention a trait à l'utilisation d'un additif soufré tel que défini ci-dessus dans la préparation d'un particule coeur utilisé pour entrer dans la constitution d'un copolymère coeur-écorce par polymérisation radicalaire en émulsion d'un monomère élastomère éthylénique et d'un agent de réticulation en vue d'obtenir une taille moyenne de particules dudit coeur inférieure à 50 nm.

L'appareil utilisé pour la détermination de la distribution des tailles de particules est un « Zetasizer 5000 » (Malvern Instruments Ltd) travaillant dans la gamme de 5-3000 nm. La technique utilisée par l'appareil est une spectroscopie par corrélation de photons (correspondant à la dénomination anglaise « Photon Correlation Spectroscopy » abrégée PCS, norme ISO 13321).

La médiane est le diamètre qui divise la distribution en deux parties d'aires égales. On la note D₅₀. Si la distribution est volumique, on peut dire que 50% du volume total des particules correspond au volume des particules de diamètres inférieur au D₅₀. Si la distribution est en nombre on peut dire que 50% des particules ont une taille inférieure au D_{50.} Par diamètre moyen D₅₀ ou diametre moyenne de particules, on entend un diamètre tel que 50 % des grains en poids ont une taille inférieure audit diamètre.

Les copolymères coeur-écorce, sous forme de particules, sont, en particulier, destinés à être incorporés dans une matrice polymère. Du fait de la faible taille des particules coeur-écorce (notamment de la taille du coeur, l'écorce se dispersant généralement dans la matrice du fait de sa compatibilité avec celle-ci), l'efficacité des copolymères sera d'autant plus importante, notamment du fait du recouvrement du champ de contrainte générés par ceux-ci, lorsque le mécanisme principal de déformation de la matrice polymère, est un mécanisme d'écoulement plastique connu en anglais sous le nom de « shear yielding ».

Ainsi, les copolymères coeur-écorce obtenus par le procédé de l'invention peuvent être utilisés en tant que modifiant choc destiné à entrer dans la constitution d'une matrice polymère, la particularité de ces copolymères étant, en plus, qu'ils préservent la transparence optique des matrices dans lesquels ils sont inclus. Ladite matrice polymère peut être thermoplastique ou thermodurcissable. Lesdits copolymères coeur-écorce peuvent être inclus dans une matrice polymère à raison de 1 à 50% en masse par rapport à la masse de la matrice, de préférence de 2 à 20%.

Selon l'invention, la matrice thermoplastique peut être une matrice à base de polychlorure de vinyle, ABS (correspondant à un copolymère acrylonitrile-butadiène-styrène), ASA (correspondant à un copolymère acrylate-styrène-acrylonitrile), polycarbonate-polyester, polycarbonate-ABS, polycarbonate-ASA ou les mélanges de ceux-ci. En particulier, les copolymères coeur-écorce susmentionnés sont particulièrement adaptés pour les matrices en polycarbonate, en polyester ou en résine époxy.

On précise que, par modifiant choc, on entend un additif apte à augmenter les propriétés d'impact et/ou de résistance aux chocs et/ou les propriétés de résistance d'une matrice polymère dans lesquelles il est incorporé.

Ainsi, l'invention a aussi trait à une matrice polymère comprenant au moins un copolymère coeur-écorce tel que défini ci-dessus, ladite matrice pouvant être une matrice thermoplastique telle que définie ci-dessus.

L'invention a aussi trait à un article manufacturé comprenant une matrice polymère telle que définie ci-dessus, cet article manufacturé pouvant être réalisé par injection, moulage, extrusion, extrusion-soufflage. A titre d'exemples d'articles manufacturés, on peut citer les matériaux de construction, tels que les profilés de fenêtres, les matériaux de packaging de produits d'utilisation courante, tels que les coques d'ordinateur, de téléphone.

L'invention va maintenant être décrite par rapport aux exemples suivants donnés à titre illustratif et non limitatif.

### EXPOSÉ DÉTAILLÉ DE MODES DE RÉALISATION PARTICULIERS

### EXEMPLE 1 comparatif

On prépare une solution comprenant 0,24 g de HCO₃Na (remplissant le rôle de tampon pH), 10,14 g de tensioactif SLS (laurylsulfate de sodium) et 485 g d'eau distillée. On mélange sous agitation et on chauffe (jusqu'à environ 50°C jusqu'à dissolution totale du tensioactif).

On prépare parallèlement un mélange comprenant 0,11 g d'agent de transfert de chaîne tert-dodécylmercaptan (abrégé TDM), 220 g d'acrylate de n-butyle, 1,33 g de méthacrylate d'allyle.

On introduit les deux mélanges ci-dessus dans un réacteur double enveloppe de 1 litre mis préalablement sous vide, avec agitation à 150 tours/minute et à 65°C.

On désoxygène le milieu avec 3 cycles de mise sous vide puis sous azote pour rendre l'atmosphère du réacteur inerte puis on le laisse sous vide à 65°C avant introduction de l'amorceur.

On prépare une solution contenant l'amorceur de polymérisation, le persulfate de potassium, à raison de 0,22 g dans 15 g d'eau.

La solution obtenue est introduite dans un sas sous balayage azote puis est injectée dans le réacteur par poussée d'azote. Le sas est rincé avec 40 g d'eau toujours sous azote, l'eau de rinçage étant également injectée dans le réacteur.

La pression du réacteur est ajustée à 1,5 bars avec de l'azote. On considère alors ce moment comme le temps T=0 de début de polymérisation. On suit la conversion par prélèvements refroidis immédiatement dans la glace et contrôle par extrait sec avec une thermobalance à 140°C (Mettler Toledo HB43).

On stoppe la polymérisation au bout de 3 heures. Les échantillons prélevés sont séchés à l'étuve ventilée une nuit à 100°C.

La distribution des tailles de particules du latex final est mesurée à l'aide de l'appareil Zetasizer 5000, après dilution du latex pour ajuster la concentration nécessaire dans la cellule de mesure.

Les résultats obtenus après 3 heures de polymérisation sont les suivants :

| | %* TDM | %* SLS | %* DBTTC | Taux de solides % | Conversion à 270 min | D₅₀ nm |
|---|---|---|---|---|---|---|
| Coeur de l'exemple 1 comparatif | 0,05 | 4,2 | 0 | 30 | 98,8% | 90 |

| | | | | | | |
|---|---|---|---|---|---|---|
| * en masse par rapport à la masse de monomères | | | | | | |

Le taux de solides correspond au pourcentage en masse de matière solide par rapport à la masse totale du milieu de polymérisation après 3 heures de polymérisation, ce taux étant mesuré à l'aide d'une thermobalance.

La grandeur D₅₀ correspond au diamètre tel que 50% en masse des particules ont une taille inférieure audit diamètre indiqué dans le tableau.

Une fois le coeur obtenu, il est procédé à la synthèse de l'écorce.

Pour ce faire, on introduit le latex de coeur préalablement obtenu dans un réacteur double enveloppe de 1 litre mis préalablement sous vide, avec agitation à 150 tours/minute.

On désoxygène le milieu avec 3 cycles de mise sous vide puis sous azote pour rendre l'atmosphère du réacteur inerte puis on le laisse sous vide et on chauffe le milieu réactionnel à 80°C.

On introduit à l'aide d'une pompe 88 g de méthacrylate de méthyle.

Une fois que la température du réacteur est revenue à 80°C, on introduit la solution d'amorceur (0,088 g de persulfate de potassium dissous dans 15 g d'eau). On maintient la température à 80°C pendant 1 heure puis on refroidit le milieu réactionnel.

Pour être utilisé en tant que modifiant choc, le copolymère coeur-écorce est récupéré sous forme de poudre sèche par une méthode classique (atomisation, coaguluation-filtration-séchage).

### EXEMPLE 1

On prépare une solution comprenant 0,24 g de HCO₃Na (remplissant le rôle de tampon), 8,77 g de tensioactif SLS (laurylsulfate de sodium) et 485 g d'eau distillée. On mélange sous agitation et on chauffe (jusqu'à environ 50°C jusqu'à dissolution totale du tensioactif).

On prépare parallèlement un mélange comprenant un agent de transfert de chaîne tert-dodécylmercaptan (abrégé TDM) à raison de 0,10 g (soit 0,05% en masse par rapport à la masse de monomères (acrylate de n-butyle + méthacrylate d'allyle)), un agent soufré trithiocarbonate de dibenzyle (abrégé DBTTC) de formule (III) suivante : 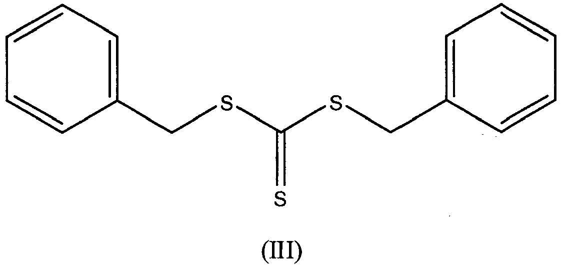 à raison de 0,36 g (soit 0,18% en masse par rapport à la masse de monomères (acrylate de n-butyle + méthacrylate d'allyle)), de 200 g de mélange comprenant de l'acrylate de n-butyle et du méthacrylate d'allyle en proportions respectives 99,4/0,6.

On introduit les deux mélanges ci-dessus dans un réacteur double enveloppe de 1 litre mis préalablement sous vide, avec agitation à 150 tours/minute et à 65°C. On désoxygène le milieu avec 3 cycles de mise sous vide puis sous azote pour rendre l'atmosphère du réacteur inerte puis on le laisse sous vide à 65°C avant introduction de l'amorceur.

On prépare une solution contenant l'amorceur de polymérisation, le persulfate de potassium, à raison de 0,2 g dans 15 g d'eau.

La solution obtenue est introduite dans un sas (qui correspond à une petite capacité reliée au réacteur) sous balayage azote puis est injectée dans le réacteur par poussée d'azote. Le sas est rincé avec 40 g d'eau toujours sous azote, l'eau de rinçage étant également injectée dans le réacteur.

La pression du réacteur est ajustée à 1,5 bars avec de l'azote. On considère alors ce moment comme le temps T=0 de début de polymérisation. On suit la conversion par prélèvements refroidis immédiatement dans la glace et contrôle par extrait sec avec une thermobalance à 140°C (Mettler Toledo HB43).

On stoppe la polymérisation au bout de 3 heures. Les échantillons prélevés sont séchés à l'étuve ventilée une nuit à 100°C.

La distribution des tailles de particules du latex final est mesurée à l'aide de l'appareil Zetasizer 5000, après dilution du latex pour ajuster la concentration nécessaire dans la cellule de mesure.

Les résultats obtenus après 3 heures de polymérisation sont les suivants :

| | %*TDM | %* SLS | %* DBTTC | Taux de solides % | Conversion à 270 min | D₅₀ nm |
|---|---|---|---|---|---|---|
| Coeur de l'exemple 1 | 0,05 | 4,0 | 0,18 | 28 | 98,8% | 30 |

| | | | | | | |
|---|---|---|---|---|---|---|
| * en masse par rapport à la masse de monomères | | | | | | |

En présence de l'agent soufré, on peut noter une diminution significative de la grandeur D₅₀.

Une fois le coeur obtenu, il est procédé à la synthèse de l'écorce.

Pour ce faire, on introduit le latex de coeur préalablement obtenu dans un réacteur double enveloppe de 1 litre mis préalablement sous vide, avec agitation à 150 tours/minute.

On désoxygène le milieu avec 3 cycles de mise sous vide puis sous azote pour rendre l'atmosphère du réacteur inerte puis on le laisse sous vide et on chauffe le milieu réactionnel à 80°C.

On introduit à l'aide d'une pompe 88 g de méthacrylate de méthyle.

Une fois que la température du réacteur est revenue à 80°C, on introduit la solution d'amorceur (0,088 g de persulfate de potassium dissous dans 15 g d'eau). On maintient la température à 80°C pendant 1 heure puis on refroidit le milieu réactionnel.

Pour être utilisé en tant que modifiant choc, le copolymère coeur-écorce est récupéré sous forme de poudre sèche par une méthode classique (atomisation, coagulation-filtration-séchage).

## Revendications

1. Procédé de préparation d'un copolymère coeur-écorce comprenant les étapes suivantes :
- une étape de mise en oeuvre du procédé de fabrication du coeur d'un copolymère de type coeur-écorce formant une suspension de particules, ledit coeur étant un coeur élastomère réticulé comprenant une étape de polymérisation radicalaire en émulsion d'au moins un monomère élastomère éthylénique et d'un agent de réticulation en présence d'un initiateur de polymérisation radicalaire et d'un additif soufré répondant à la formule (I) suivante : 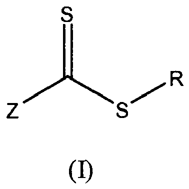 dans laquelle :
- R est choisi parmi -CH₂R¹, -CHR¹R'¹ et -CR¹R'¹R"¹ avec R¹, R'¹ et R"¹, identiques ou différents, représentant chacun indépendamment l'un de l'autre un groupe choisi parmi les groupes alkyles éventuellement substitués, les groupes carbocycliques ou hétérocycliques, saturés ou non saturés, éventuellement aromatiques, lesdits groupes étant éventuellement substitués, les groupes alkylthio éventuellement substitués, les groupes alcoxy éventuellement substitués, les groupes dialkylamino éventuellement substitués, les groupes organométalliques, les groupes acyles, les groupes acyloxy, les groupes carboxy et leurs sels, les groupes esters d'acide carboxylique, les groupes acide sulfonique et leurs sels, les groupes esters d'acide sulfonique, les groupes alcoxy- ou aryloxycarbonyles et les groupes polymères ; et
- Z est choisi parmi H, les atomes d'halogène, les groupes alkyles éventuellement substitués, les groupes aryles éventuellement substitués, les groupes hétérocycliques éventuellement substitués, les groupes -SR² éventuellement substitués, les groupes alcoxycarbonyles éventuellement substitués, les groupes aryloxycarbonyles éventuellement substitués, les groupes carboxy -COOH, les groupes acyloxy -OCOR², les groupes carbamoyles de formules -CONHR² ou -CONR²R³ éventuellement substitués, les groupes cyano -CN, les groupes -P(=O)OR²₂, les groupes -P(=O)R²₂, les groupes polymères, les groupes -OR² et les groupes -NR²R³ ; et
- R² et R³, identiques ou différents, sont choisis dans le groupe constitué par les groupes alkyles en C₁ à C₁₈, les groupes alcényles en C₂ à C₁₈, les groupes aryles en C₆ à C₁₈, les groupes hétérocycliques, les groupes aralkyles, les groupes alkaryles, chacun de ces groupes étant éventuellement substitué par au moins un substituant choisi parmi les groupes époxy, hydroxy, alcoxy, acyles, acyloxy, carboxy et leurs sels, esters d'acide carboxylique, acide sulfonique et leurs sels, esters d'acide sulfonique, alcoxy- ou aryloxycarbonyles, isocyanato, cyano, silyles, halogènes ou dialkylamino., et
- une étape de réalisation de l'écorce par mise en contact du coeur obtenu à l'étape précédente avec au moins un monomère destiné à entrer dans la constitution de l'écorce.

2. Procédé selon la revendication 1, dans lequel l'additif soufré répond à la formule (II) suivante : 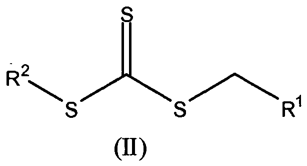 dans laquelle R¹ et R² répondent à la même définition que celle donnée à la revendication 1.

3. Procédé selon la revendication 1 ou 2, dans lequel R¹ correspond à un groupe aryle, tel qu'un groupe phényle, tandis que R² correspond à un groupe aralkyle, tel qu'un groupe benzyle.

4. Procédé selon la revendication 1, dans lequel, pour l'additif soufré de formule (I), R est un groupe -CHR¹R'¹ avec R¹ représentant un groupe alkyle et R'¹ représentant un groupe carboxy et Z représente un groupe -SR² avec R² représentant un groupe alkyle substitué par un groupe carboxy.

5. Procédé selon l'une quelconque des revendications précédentes, dans lequel l'additif soufré est présent, dans l'étape de polymérisation, à une teneur allant de 0,005 partie en poids à 5 parties en poids pour 100 parties de monomères.

6. Procédé selon l'une quelconque des revendications précédentes, dans lequel le monomère élastomère est choisi parmi un isoprène, un butadiène (tel que le butadiène-1,4), le styrène, l'acrylonitrile, un (méth)acrylate d'alkyle et les mélanges de ceux-ci

7. Procédé selon l'une quelconque des revendications précédentes, dans lequel le monomère élastomère est l'acrylate de n-butyle.

8. Procédé selon l'une quelconque des revendications précédentes, dans lequel l'agent de réticulation est choisi parmi le divinylbenzène, le trivinylbenzène, l'acrylate de vinyle, le méthacrylate d'allyle CH₂=C(CH₃)COOCH₂CH=CH₂, le méthacrylate de vinyle CH₂=C (CH₃) COOCH=CH₂, le butadiènedioldiacrylate, l'hexanedioldiacrylate, le PEG-diacrylate, le triméthacrylate de triméthylolpropane et les mélanges de ceux-ci.

9. Procédé selon l'une quelconque des revendications précédentes, dans lequel l'agent de réticulation est le méthacrylate d'allyle.

10. Procédé selon l'une quelconque des revendications précédentes, dans lequel l'étape de polymérisation est réalisée en présence d'au moins un tensioactif et éventuellement d'au moins un agent de transfert de chaîne.

11. Procédé selon la revendication 10, dans lequel l'agent de transfert de chaîne est un composé mercaptan comprenant au moins 4 atomes de carbone choisi parmi le butylmercaptan, le n-octylmercaptan, le n-dodécylmercaptan et le tert-dodécylmercaptan.

12. Procédé selon l'une quelconque des revendications précédentes, dans lequel l'étape de polymérisation en émulsion est réalisée dans un milieu de dispersion aqueux.

13. Procédé selon la revendication 1, dans lequel le monomère destiné à entrer dans la constitution de l'écorce est choisi parmi les (méth)acrylates d'alkyle, les monomères styréniques, l'acrylonitrile et les mélanges de ceux-ci.

14. Procédé selon la revendication 13, dans lequel le monomère destiné à entrer dans la constitution de l'écorce est le méthacrylate de méthyle.

15. Copolymère coeur-écorce susceptible d'être obtenu par un procédé tel que défini selon l'une quelconque des revendications 1 à 14 présentant une taille moyenne de particules coeur inférieure à 50 nm, de préférence inférieure à 40 nm, de préférence encore inférieure à 30 nm.

16. Copolymère coeur-écorce selon la revendication 15 présentant une taille moyenne de particules coeur-écorce inférieure à 60 nm, de préférence inférieure à 50 nm, de préférence encore inférieure à 40 nm.

17. Utilisation d'un additif soufré tel que défini à la revendication 1 dans la préparation d'un particule coeur utilisé pour entrer dans la constitution d'un copolymère coeur-écorce par polymérisation radicalaire en émulsion d'un monomère élastomère éthylénique et d'un agent de réticulation en vue d'obtenir une taille moyenne de particules dudit coeur inférieure à 50 nm.

18. Utilisation d'un copolymère coeur-écorce tel que défini dans la revendication 15 ou 16 en tant que modifiant choc pour des matrices polymères et en vue de préserver la transparence optique de celle-ci.

19. Matrice polymère comprenant au moins un copolymère coeur-écorce tel que défini à la revendication 15 ou 16.

20. Matrice polymère selon la revendication 19, qui est une matrice thermoplastique.

21. Matrice polymère selon la revendication 20, dans laquelle la matrice thermoplastique est choisi parmi les matrices à base de polychlorure de vinyle, de ABS (correspondant à un copolymère acrylonitrile-butadiène-styrène), de ASA (correspondant à un copolymère acrylate-styrène-acrylonitrile), de polycarbonate-polyester, de polycarbonate-ABS, polycarbonate-ASA et les mélanges de ceux-ci.

22. Article manufacturé comprenant une matrice polymère telle que définie selon l'une quelconque des revendications 19 à 21.

## Patentansprüche

1. Verfahren zur Herstellung eines Kern-Schale-Copolymers, das folgende Schritte umfasst:
- einen Schritt der Durchführung des Verfahrens zur Herstellung des Kerns eines Copolymers vom Kern-Schale-Typ, das eine Teilchensuspension bildet, wobei es sich bei dem Kern um einen elastomeren Kern handelt, umfassend einen Schritt der radikalischen Emulsionspolymerisation mindestens eines ethylenischen elastomeren Monomers und eines Vernetzungsmittels in Gegenwart eines Radikalpolymerisationsinitiators und eines schwefelhaltigen Additivs der folgenden Formel (I): 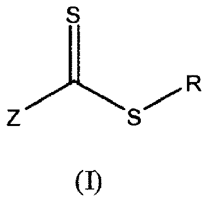 worin:
- R aus -CH₂R¹, -CHR¹R'¹ and -CR¹R'¹R''¹ ausgewählt ist, wobei R¹, R'¹ und R"¹ gleich oder verschieden sind und jeweils unabhängig voneinander für eine Gruppe, die aus gegebenenfalls substituierten Alkylgruppen, gesättigten oder ungesättigten, gegebenenfalls aromatischen carbocyclischen oder heterocyclischen Gruppen, wobei die Gruppen gegebenenfalls substituiert sind, gegebenenfalls substituierten Alkylthiogruppen, gegebenenfalls substituierten Alkoxygruppen, gegebenenfalls substituierten Dialkylaminogruppen, metallorganischen Gruppen, Acylgruppen, Acyloxygruppen, Carboxygruppen und Salzen davon, Carbonsäureestergruppen, Sulfonsäuregruppen und Salzen davon, Sulfonsäureestergruppen, Alkoxy- oder Aryloxycarbonylgruppen und Polymergruppen ausgewählt ist, stehen; und
- Z aus H, Halogenatomen, gegebenenfalls substituierten Alkylgruppen, gegebenenfalls substituierten Arylgruppen, gegebenenfalls substituierten heterocyclischen Gruppen, gegebenenfalls substituierten -SR²-Gruppen, gegebenenfalls substituierten Alkoxycarbonylgruppen, gegebenenfalls substituierten Aryloxycarbonylgruppen, Carboxygruppen -COOH, Acyloxygruppen -OCOR², gegebenenfalls substituierten Carbamoylgruppen der Formel -CONHR² oder -CONR²R³, Cyanogruppen -CN, -P(=O)OR²₂-Gruppen, -P(=O)R²₂-Gruppen, Polymergruppen, -OR²-Gruppen und -NR²R³-Gruppen ausgewählt ist und
- R² und R³ gleich oder verschieden sind und aus der Gruppe bestehend aus C₁- bis C₁₈-Alkylgruppen, C₂- bis C₁₈-Alkenylgruppen, C₆- bis C₁₈-Arylgruppen, heterocyclischen Gruppen, Aralkylgruppen und Alkarylgruppen ausgewählt sind, wobei jede dieser Gruppen gegebenenfalls durch mindestens einen Substituenten, der aus Epoxidgruppen, Hydroxygruppen, Alkoxygruppen, Acylgruppen, Acyloxygruppen, Carboxygruppen und Salzen davon, Carbonsäureestergruppen, Sulfonsäuregruppen und Salzen davon, Sulfonsäureestergruppen, Alkoxy- oder Aryloxycarbonylgruppen, Isocyanatogruppen, Cyanogruppen, Silylgruppen, Halogengruppen oder Dialkylaminogruppen ausgewählt ist, substituiert ist, und
- einen Schritt der Herstellung der Schale durch Inberührungbringen des im vorhergehenden Schritt erhaltenen Kerns mit mindestens einem zum Aufbau der Schale zu verwendenden Monomer.

2. Verfahren nach Anspruch 1, bei dem das schwefelhaltige Additiv der folgenden Formel (II) entspricht: 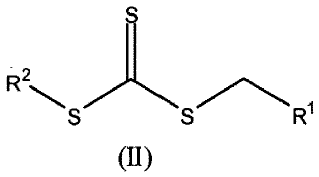 worin R¹ und R² der gleichen Definition wie in Anspruch 1 entsprechen.

3. Verfahren nach Anspruch 1 oder 2, bei dem R¹ einer Arylgruppe, wie einer Phenylgruppe, entspricht, während R² einer Aralkylgruppe, wie einer Benzylgruppe, entspricht.

4. Verfahren nach Anspruch 1, bei dem für das schwefelhaltige Additiv der Formel (I) R für eine -CHR¹R^{'1}-Gruppe steht, wobei R¹ für eine Alkylgruppe steht und R^{'1} für eine Carboxygruppe steht, und Z für eine -SR²-Gruppe steht, wobei R² für eine durch eine Carboxygruppe substituierte Alkylgruppe steht.

5. Verfahren nach einem der vorhergehenden Ansprüche, bei dem das schwefelhaltige Additiv im Polymerisationsschritt in einem Gehalt im Bereich von 0,005 Gewichtsteilen bis 5 Gewichtsteilen pro 100 Teile Monomere vorliegt.

6. Verfahren nach einem der vorhergehenden Ansprüche, bei dem das elastomere Monomer aus einem Isopren, einem Butadien (wie 1,4-Butadien), Styrol, Acrylnitril, einem Alkyl(meth)acrylat und Mischungen davon ausgewählt wird.

7. Verfahren nach einem der vorhergehenden Ansprüche, bei dem es sich bei dem elastomeren Monomer um n-Butylacrylat handelt.

8. Verfahren nach einem der vorhergehenden Ansprüche, bei dem man das Vernetzungsmittel aus Divinylbenzol, Trivinylbenzol, Vinylacrylat, Allylmethacrylat CH₂=C(CH₃)COOCH₂CH=CH₂, Vinylmethacrylat CH₂=C(CH₃)COOCH=CH₂, Butadiendioldiacrylat, Hexandioldiacrylat, PEG-Diacrylat, Trimethylolpropantrimethacrylat und Mischungen davon auswählt.

9. Verfahren nach einem der vorhergehenden Ansprüche, bei dem es sich bei dem Vernetzungsmittel um Allylmethacrylat handelt.

10. Verfahren nach einem der vorhergehenden Ansprüche, bei dem man den Polymerisationsschritt in Gegenwart mindestens eines Tensids und gegebenenfalls mindestens eines Kettenübertragungsmittels durchführt.

11. Verfahren nach Anspruch 10, bei dem es sich bei dem Kettenübertragungsmittel um eine Mercaptanverbindung mit mindestens 4 Kohlenstoffatomen, die aus Butylmercaptan, n-Octylmercaptan, n-Dodecylmercaptan und tert.-Dodecylmercaptan ausgewählt wird, handelt.

12. Verfahren nach einem der vorhergehenden Ansprüche, bei dem man den Emulsionspolymerisationsschritt in einem wässrigen Dispersionsmedium durchführt.

13. Verfahren nach Anspruch 1, bei dem man das zum Aufbau der Schale zu verwendende Monomer aus Alkyl(meth)acrylaten, Styrolmonomeren, Acrylnitril und Mischungen davon auswählt.

14. Verfahren nach Anspruch 13, bei dem es sich bei dem zum Aufbau der Schale zu verwendenden Monomer um Methylmethacrylat handelt.

15. Kern-Schale-Copolymer, das durch ein Verfahren gemäß einem der Ansprüche 1 bis 14 erhältlich ist und eine mittlere Größe der Kernteilchen von weniger als 50 nm, vorzugsweise weniger als 40 nm und weiter bevorzugt weniger als 30 nm aufweist.

16. Kern-Schale-Copolymer nach Anspruch 15, das eine mittlere Größe der Kern-Schale-Teilchen von weniger als 60 nm, vorzugsweise weniger als 50 nm und weiter bevorzugt weniger als 40 nm aufweist.

17. Verwendung eines schwefelhaltigen Additivs gemäß Anspruch 1 bei der Herstellung eines zum Aufbau eines Kern-Schale-Copolymers verwendeten Kernteilchens durch radikalische Emulsionspolymerisation eines ethylenischen elastomeren Monomers und eines Vernetzungsmittels zum Erhalt einer mittleren Größe der Kernteilchen von weniger als 50 nm.

18. Verwendung eines Kern-Schale-Copolymers gemäß Anspruch 15 oder 16 als Schlagzähigkeitsmodifikator für Polymermatrices und zur Konservierung der optischen Transparenz der Polymermatrices.

19. Polymermatrix, umfassend mindestens ein Kern-Schale-Copolymer gemäß Anspruch 15 oder 16.

20. Polymermatrix nach Anspruch 19, bei der es sich um eine thermoplastische Matrix handelt.

21. Polymermatrix nach Anspruch 20, wobei die thermoplastische Matrix aus Matrices auf Basis von Polyvinylchlorid, ABS (entsprechend einem Acrylnitril-Butadien-Styrol-Copolymer), ASA (entsprechend einem Acrylat-Styrol-Acrylnitril-Copolymer), Polycarbonat-Polyester, Polycarbonat-ABS, Polycarbonat-ASA und Mischungen davon ausgewählt ist.

22. Erzeugnis, umfassend eine Polymermatrix gemäß einem der Ansprüche 19 bis 21.

## Claims

1. Process for the preparation of a core/shell copolymer comprising the following stages:
- a stage of carrying out the process for the manufacture of the core of a copolymer of core/shell type forming a suspension of particles, the said core being a crosslinked elastomer core, comprising a stage of radical emulsion polymerization of at least one ethylenic elastomer monomer and of a crosslinking agent in the presence of a radical polymerization initiator and of a sulphur-comprising additive corresponding to the following formula (I): 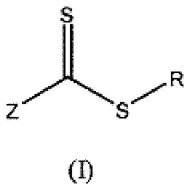 in which:
- R is chosen from -CH₂R¹, -CHR¹R'¹ and -CR¹R'¹R"¹ with R¹, R'¹ and R"¹, which are identical or different, each representing, independently of one another, a group chosen from optionally substituted alkyl groups, saturated or unsaturated, optionally aromatic, carbocyclic or heterocyclic groups, the said groups optionally being substituted, optionally substituted alkylthio groups, optionally substituted alkoxy groups, optionally substituted dialkylamino groups, organometallic groups, acyl groups, acyloxy groups, carboxyl groups and their salts, carboxylic acid ester groups, sulphonic acid groups and their salts, sulphonic acid ester groups, alkoxy- or aryloxycarbonyl groups and polymer groups; and
- Z is chosen from H, halogen atoms, optionally substituted alkyl groups, optionally substituted aryl groups, optionally substituted heterocyclic groups, optionally substituted -SR² groups, optionally substituted alkoxycarbonyl groups, optionally substituted aryloxycarbonyl groups, carboxyl -COOH groups, acyloxy -OCOR² groups, carbamoyl groups of formulae -CONHR² or -CONR²R³ which are optionally substituted, cyano -CN groups, -P(=O)OR²₂ groups, -P(=O)R²₂ groups, polymer groups, -OR² groups and -NR²R³ groups; and
- R² and R³, which are identical or different, are chosen from the group consisting of C₁ to C₁₈ alkyl groups, C₂ to C₁₈ alkenyl groups, C₆ to C₁₈ aryl groups, heterocyclic groups, aralkyl groups and alkaryl groups, each of these groups being optionally substituted by at least one substituent chosen from the following groups: epoxy, hydroxyl, alkoxy, acyl, acyloxy, carboxyl and its salts, carboxylic acid ester, sulphonic acid and its salts, sulphonic acid ester, alkoxy- or aryloxycarbonyl, isocyanato, cyano, silyl, halogen or dialkylamino, and
- a stage of producing the shell by bringing the core obtained in the preceding stage into contact with at least one monomer intended to participate in the creation of the shell.

2. Process according to Claim 1, in which the sulphur-comprising additive corresponds to the following formula (II): 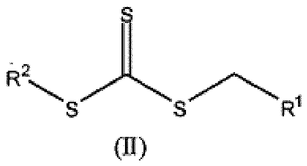 in which R¹ and R² correspond to the same definitions as those given in Claim 1.

3. Process according to Claim 1 or 2, in which R¹ corresponds to an aryl group, such as a phenyl group, while R² corresponds to an aralkyl group, such as a benzyl group.

4. Process according to Claim 1, in which, for the sulphur-comprising additive of formula (I), R is a -CHR¹R'¹ group, with R¹ representing an alkyl group and R'¹ representing a carboxyl group, and Z represents an -SR² group, with R² representing an alkyl group substituted by a carboxyl group.

5. Process according to any one of the preceding claims, in which the sulphur-comprising additive is present, in the polymerization stage, at a content ranging from 0.005 part by weight to 5 parts by weight, per 100 parts of monomers.

6. Process according to any one of the preceding claims, in which the elastomer monomer is chosen from an isoprene, a butadiene (such as 1,4-butadiene), styrene, acrylonitrile, and alkyl(meth)acrylate and the mixtures of these.

7. Process according to any one of the preceding claims, in which the elastomer monomer is n-butyl acrylate.

8. Process according to any one of the preceding claims, in which the crosslinking agent is chosen from divinylbenzene, trivinylbenzene, vinyl acrylate, allyl methacrylate CH₂=C(CH₃)COOCH₂CH=CH₂, vinyl methacrylate CH₂=C(CH₃)COOCH=CH₂, butadiene-diol diacrylate, hexanediol diacrylate, PEG diacrylate, trimethylolpropane trimethacrylate and the mixtures of these.

9. Process according to any one of the preceding claims, in which the crosslinking agent is allyl methacrylate.

10. Process according to any one of the preceding claims, in which the polymerization stage is carried out in the presence of at least one surfactant and optionally of at least one chain-transfer agent.

11. Process according to Claim 10, in which the chain-transfer agent is a mercaptan compound comprising at least 4 carbon atoms chosen from butyl mercaptan, n-octyl mercaptan, n-dodecyl mercaptan and tert-dodecyl mercaptan.

12. Process according to any one of the preceding claims, in which the emulsion polymerization stage is carried out in an aqueous dispersion medium.

13. Process according to Claim 1, in which the monomer intended to participate in the creation of the shell is chosen from alkyl(meth)acrylates, styrene monomers, acrylonitrile and the mixtures of these.

14. Process according to Claim 13, in which the monomer intended to participate in the creation of the shell is methyl methacrylate.

15. Core/shell copolymer capable of being obtained by a process as defined according to any one of Claims 1 to 14, exhibiting a mean core particle size of less than 50 nm, preferably of less than 40 nm, more preferably of less than 30 nm.

16. Core/shell copolymer according to Claim 15, exhibiting a mean core/shell particle size of less than 60 nm, preferably of less than 50 nm, more preferably of less than 40 nm.

17. Use of a sulphur-comprising additive as defined in Claim 1 in the preparation of a core particle used to participate in the creation of a core/shell copolymer by radical emulsion polymerization of an ethylenic elastomer monomer and of a crosslinking agent for the purpose of obtaining a mean particle size of the said core of less than 50 nm.

18. Use of a core/shell copolymer as defined in Claim 15 or 16 as impact modifier for polymer matrices and for the purpose of preserving the optical transparency of the latter.

19. Polymer matrix comprising at least one core/shell copolymer as defined in Claim 15 or 16.

20. Polymer matrix according to Claim 19 which is a thermoplastic matrix.

21. Polymer matrix according to Claim 20, in which the thermoplastic matrix is chosen from matrices based on polyvinyl chloride, on ABS (corresponding to an acrylonitrile/butadiene/styrene copolymer), on ASA (corresponding to an acrylate/styrene/acrylonitrile copolymer), on polycarbonate-polyester, on polycarbonate-ABS, on polycarbonate-ASA and the mixtures of these.

22. Manufactured article comprising a polymer matrix as defined according to any one of Claims 19 to 21.
